# FASCICULE DE BREVET EUROPEEN

(11) **EP 3 487 191 B1**
(45) Date de publication et mention de la délivrance du brevet: **29.12.2021**
(21) Numéro de dépôt: 18207159.7
(22) Date de dépôt: 20.11.2018
(51) Int. Cl.: H04W 4/02, H04W 4/06

(54) **SYSTEME DE COMMUNICATION DE GROUPE POUR LA TRANSMISSION DE DONNEES MULTIMEDIA**
GRUPPENKOMMUNIKATIONSSYSTEM ZUR ÜBERTRAGUNG VON MULTIMEDIADATEN
GROUP COMMUNICATION SYSTEM FOR TRANSMITTING MULTIMEDIA DATA

(30) Priorité: 20.11.2017 FR 1760942
(43) Date de publication de la demande: 22.05.2019
(73) Titulaire: Airbus DS SLC, 78990 Elancourt (FR)
(72) Inventeur: MARQUE-PUCHEU, Gérard, 78480 Verneuil/Seine (FR); PIROARD, François, 92260 Fontenay-Aux-Roses (FR)
(74) Mandataire: Cabinet Camus Lebkiri

(56) Documents cités:
- US-A1- 2014 064 177
- US-A1- 2014 162 700
- AIRBUS DS SLC: "CCA Stage 3 Draft", ETSI DRAFT; TCCE04(17)000022R1, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. WG - TCCE 4 - TCCE High Speed Data 28 septembre 2017 (2017-09-28), pages 1-41, XP014300501, Extrait de l'Internet: URL:docbox.etsi.org\TCCE\TCCE\60-WGs\wg4\0 5-CONTRIBUTIONS\2017\2017_10_03_WG_TCCE4#1 51\TCCE04(17)000022r1_CCA_Stage_3_Draft\dr aft_stage 3_ts_xxxxxxv0.0.2.doc [extrait le 2017-09-28]

## Description

### DOMAINE TECHNIQUE DE L'INVENTION

Le domaine de l'invention concerne les procédés et systèmes de communication de groupe. Par système de communication de groupe, on désigne des systèmes de communication aptes à distribuer des informations depuis une entité - typiquement un serveur de communication -vers des terminaux client ciblés ; les terminaux client - également désignés comme "terminaux multimédia client", ou encore "clients"- sont ciblés dans la mesure où ils appartiennent à un groupe préalablement défini. Pour appartenir à un groupe, un terminal client doit s'être affilié à ce groupe, et il possède alors des moyens pour recevoir et/ou décrypter des messages distribués à destination dudit groupe. Un groupe peut par exemple correspondre à une unité d'intervention, de type pompiers ou militaires. Un même terminal client peut appartenir à différents groupes.

La présente invention trouve une application notamment dans la mise en oeuvre du standard MCPTT (Mission Critical Push To Talk), ainsi que des autres standards de la famille MCS (Mission Critical Services). Elle pourra trouver un intérêt dans la mise en œuvre de standards de communication dans lesquels interviennent dans un même système de communication de groupe des dispositifs de distribution de messages de type broadcast et des dispositifs de distribution de type unicast, vers des terminaux clients susceptibles d'évoluer géographiquement..

### ETAT DE L'ART

Les standards actuels pour gérer les communications de groupe sont par exemple les standards TETRA ou TETRAPOL. Ils fonctionnent selon un mode de distribution broadcast. Avec les nouveaux standards de communication, par exemple le standard MCPTT, on est cependant susceptible de faire intervenir les réseaux de communication grand public, disposant d'une couverture nationale. Ces réseaux de communication ont principalement un mode de distribution unicast, c'est-à-dire point à point.

Par ailleurs, les spécifications techniques 3GPP - 24.379 (clauses 13 et 14) et 24.380 (clauses 6.4 et 10) décrivent la gestion de communications consistant en des échanges entre des terminaux client et des fonctions de participation, hébergées sur au moins un dispositif électronique de type serveur. Ces spécifications prennent en compte le mode de distribution broadcast du service MBMS de LTE mais ne gèrent que le cas où l'ensemble des fonctions de participation sont situées dans une même zone géographique, et où il n'est pas nécessaire d'avoir des échanges entre ces différentes fonctions de participation pour gérer de manière optimale la distribution vers les terminaux clients.

Or les nouveaux standards de communication de groupe visent à dorénavant utiliser des systèmes de communication faisant intervenir une fonction de participation de distribution broadcast (également désignées comme "fonction de participation de distribution broadcast", ou encore comme "fonction de participation broadcast"), et une fonction de participation de distribution unicast (également désignées comme "fonction de participation de distribution unicast, ou encore comme "fonction de participation unicast") couvrant un nombre de terminaux client potentiellement important et répartis sur un territoire étendu.

En conséquence, dans la pratique, la fonction de participation broadcast, du fait du territoire étendu qu'elle doit couvrir, est répartie sur différentes entités de distribution broadcast, et la fonctions de participation unicast, du fait du nombre important de terminaux que le système de communication doit gérer, est également répartie entre différentes entités de distribution unicast, ces entités de distribution correspondant à des modules de communication intégrées dans des serveurs, ou à des serveurs eux-mêmes.

La mobilité des terminaux client - également désignés comme "clients", ainsi que la possibilité qu'ont ces terminaux de s'affilier, ou de ne plus s'affilier, à un groupe de communication donné, conduit à des situations où l'optimisation des ressources de distribution vers les terminaux est bénéfique.

Ainsi, par exemple, si on considère un groupe de communication donné qui est réparti sur un territoire étendu, les communications avec les terminaux de ce groupe se feront nécessairement en mode unicast. Or, par exemple dans le cas d'un groupe de pompiers se rassemblant pour une intervention donnée sur un même lieu, le mode de distribution unicast initialement adopté n'est plus optimal en terme d'économie de ressources radio lorsque les différents terminaux se retrouvent à proximité les uns des autres : une grande partie des terminaux de ce groupe étant désormais situés dans une même zone, il est judicieux de basculer, pour ces terminaux, dans un mode de distribution broadcast.

Rien dans les standards actuels ne prévoit, pour de telles communications de groupe, un tel basculement dans le cas où le système comporte une multiplicité d'entités de distribution unicast et une multiplicité d'entités de distribution broadcast du fait du nombre de terminaux client gérés et de l'étendue géographique couverte.

US 2014/064177 A1 divulgue un procédé de coordination d'un appel de groupe eMBMS.

### RESUME DE L'INVENTION

Dans l'invention, on cherche à combler cette lacune, en proposant un système de communication dans lequel on gère de manière optimale la distribution de messages ou de média vers un groupe de diffusion, en rendant possible une opération de basculement d'un mode de distribution broadcast vers un mode de distribution unicast - et vice-versa - pour certains terminaux ciblés ; cette opération de basculement étant rendue possible de telle sorte d'une part que l'ensemble des terminaux du groupe considéré reçoivent bien les messages ou le média distribués audit groupe, et qu'un terminal donné du groupe considéré ne reçoit pas les messages ou le média de manière redondante et ce, pour des configurations comportant une multiplicité d'entités de distribution unicast et une multiplicité d'entités de distribution broadcast. Ainsi, pour un terminal client qui recevait des messages ou du média dans un mode de communication unicast et qui, pour des raisons d'optimisation des ressources radio du système de communication, les reçoit à partir d'un certain moment dans un mode de communication broadcast, on s'assure dans l'invention que le terminal client considéré ne continue pas à recevoir les messages ou le média dans le mode de communication unicast. On garantit également que la communication broadcast s'effectuera sans duplication des messages ou du média dans une zone donnée.

A cet effet, on prévoit dans l'invention d'établir, pour les entités participantes unicast et les entités participantes broadcast, différentes listes relatives aux informations de localisation et d'appartenance à différents groupes de communication des terminaux gérés par le système de communication. Ces listes de contexte sont actualisées; on définit ainsi un contexte de distribution, les informations de mise à jour de ces listes étant échangées en permanence au travers d'un bus logiciel reliant l'ensemble des entités participantes.

L'invention concerne ainsi essentiellement un système de communication pour la transmission de données multimédia de groupe à un ensemble de clients multimédia, chaque client multimédia étant affilié à au moins un groupe de communication, ledit système de communication comportant :
- au moins une entité de contrôle ;
- au moins une entité participante de signalisation;
- au moins une entité participante supportant un service de distribution unicast, dite entité unicast ;
- au moins une entité participante supportant un service de distribution broadcast, dite entité broadcast ;
   des sessions de média pour une ou plusieurs communications de groupe multimédia étant établies entre au moins une entité de contrôle et la au moins une entité participante, la au moins une entité participante de signalisation et la au moins une entité unicast desservant chacune au moins un sous-ensemble de clients multimédia de l'ensemble de clients multimédia, indépendamment de la localisation géographique desdits clients multimédia ;
- la au moins une entité broadcast desservant des clients multimédia locaux de l'ensemble de clients multimédia dans une zone géographique donnée, indépendamment de l'entité participante de signalisation desservant lesdits clients multimédia locaux ;
   ledit système de communication étant caractérisé par le fait qu'il comporte un bus logiciel reliant les différentes entités participantes pour véhiculer des messages d'informations échangés entre les différentes entités participantes, lesdits messages d'information comportant des données de mise à jour pour :
   - permettre à chaque entité unicast de
      *maintenir à jour une première liste contenant pour chaque groupe de communication auquel s'est affilié au moins un client multimédia desservi par ladite entité unicast les clients multimédia affiliés audit groupe et desservis par ladite entité unicast ;
      *maintenir à jour une deuxième liste contenant pour chaque zone géographique dans laquelle se trouve au moins un client multimédia desservi par ladite entité unicast les clients multimédia se trouvant dans ladite zone géographique et desservis par ladite entité unicast ;
   - permettre à chaque entité broadcast de maintenir une troisième liste contenant pour chaque groupe de communication auquel s'est affilié au moins un client multimédia présent dans la zone géographique desservie par ladite entité broadcast, parmi ledit ensemble de clients multimédia, les clients multimédia qui sont affiliés audit groupe de communication et qui sont présents dans ladite zone géographique,
      ** l'émission, par un client multimédia de l'ensemble de clients multimédia, d'un message d'affiliation à un groupe de communication vers l'entité participante de signalisation qui gère ledit client multimédia, provoque l'envoi par ladite entité participante de signalisation d'un message d'information d'affiliation:
   - d'une part à une des entités unicast, ladite entité unicast mettant à jour la première liste et la deuxième liste ;
   - d'autre part à une des entités broadcast, ladite entité broadcast mettant à jour la troisième liste.
      **Chaque entité broadcast émet un message de disponibilité d'un service de distribution broadcast dans une zone géographique desservie par ladite entité broadcast, le message de disponibilité étant émis :
      - lorsqu'un nombre de clients multimédia, dits clients cibles, affiliés à un même groupe, dit groupe développé, est supérieur dans ladite zone géographique, à un seuil préalablement déterminé ;
      - vers l'ensemble des entités participantes unicast desservant des clients localisés dans ladite zone géographique.

Le terme "entité" utilisé dans ci-dessus désigne un ou plusieurs dispositifs électroniques, assurant une fonction dont les ressources peuvent être réparties entre ces différents dispositifs électroniques. Les dispositifs électroniques en question sont typiquement un module de communication, qui peut être intégré dans un serveur ou qui peut constituer un serveur en lui-même. Ainsi, par exemple, l'entité broadcast peut désigner chacun des modules électroniques de l'ensemble des modules électroniques contribuant à la mise en œuvre de la fonction de participation broadcast. Une entité participante peut également être désignée comme "entité de participation".

Le système selon l'invention peut avantageusement comporter une ou plusieurs caractéristiques supplémentaires, considérées individuellement ou selon toutes les combinaisons techniquement possible, parmi les suivantes :
**Le système comporte une fonction de participation de de distribution unicast et une fonction de participation de distribution broadcast réparties respectivement sur une pluralité d'entités participantes supportant un service de distribution unicast, et sur une pluralité d'entités participantes supportant un service de distribution broadcast.
**Le système comporte une fonction de participation de signalisation installée sur une unique entité participante de signalisation.
**Chaque entité broadcast ayant émis le message de disponibilité émet un message d'avertissement de commutation en mode de distribution broadcast :
   - après que chaque terminal client cible a émis un message indiquant sa disponibilité pour recevoir le mode de distribution broadcast ;
   - vers les entités unicast ayant des clients cibles du groupe développé dans la zone géographique considérée, lesdites entités unicast cessant alors d'émettre en mode de distribution unicast vers lesdits clients cibles :
      le mode de distribution broadcast étant alors mis en œuvre vers les clients cibles.
**Le mode de distribution broadcast est maintenu vers chaque client cible tant que le client cible considéré n'a pas émis de message d'information d'indisponibilité de réception broadcast.
**Le service de distribution broadcast est de type MBMS pour le standard LTE, ou de type SC-PTM.

La présente invention se rapporte également à un procédé de communication pour la transmission de données multimédia de groupe à un ensemble de clients multimédia, ledit procédé étant mis en œuvre dans un système selon l'invention, chaque client multimédia étant affilié à au moins un groupe de communication, ledit procédé de communication comportant la mise en œuvre de:
- au moins une entité de contrôle ;
- au moins une entité participante de signalisation;
- au moins une entité participante supportant un service de distribution unicast, dite entité unicast ;
- au moins une entité participante supportant un service de distribution broadcast, dite entité broadcast ;
   des sessions de média pour une ou plusieurs communications de groupe multimédia étant établies entre la au moins une entité de contrôle et la au moins une entité participante, la au moins une entité participante de signalisation et la au moins une entité unicast desservant chacune au moins un sous-ensemble de clients multimédia de l'ensemble de clients multimédia, indépendamment de la localisation géographique desdits clients multimédia ;
   la au moins une entité broadcast desservant des clients multimédia locaux de l'ensemble de clients multimédia dans une zone géographique donnée, indépendamment de l'entité participante de signalisation desservant lesdits clients multimédia locaux ;
   ledit procédé de communication étant caractérisé par les différentes étapes suivantes :
      - utilisation d'un bus logiciel reliant les différentes entités participantes pour véhiculer des messages d'informations échangés entre les différentes entités participantes ;
      - mise à jour, au moyen de données de mise à jour desdits messages d'information:
         --- de chaque entité unicast en maintenant à jour
            *une première liste contenant pour chaque groupe de communication auquel s'est affilié au moins un client multimédia desservi par ladite entité unicast les clients multimédia affiliés audit groupe et desservis par ladite entité unicast ; *une deuxième liste contenant pour chaque zone géographique dans laquelle se trouve au moins un client multimédia desservi par ladite entité unicast les clients multimédia se trouvant dans ladite zone géographique et desservis par ladite entité unicast ;
         --- de chaque entité broadcast en maintenant à jour une troisième liste contenant pour chaque groupe de communication auquel s'est affilié au moins un client multimédia présent dans la zone géographique desservie par ladite entité broadcast, parmi ledit ensemble de clients multimédia, les clients multimédia qui sont affiliés audit groupe de communication et qui sont présents dans ladite zone géographique,
            - émission, par un client multimédia de l'ensemble de clients multimédia, d'un message d'affiliation à un groupe de communication vers l'entité participante de signalisation qui gère ledit client multimédia, provoquant l'envoi par ladite entité participante de signalisation d'un message d'information d'affiliation:
               - d'une part à une des entités unicast, ladite entité unicast mettant à jour la première liste et la deuxième liste ;
               - d'autre part à une des entités broadcast, ladite entité broadcast mettant à jour la troisième liste.
            - et émission, par chaque entité broadcast d'un message de disponibilité d'un service de distribution broadcast dans une zone géographique desservie par ladite entité broadcast, le message de disponibilité étant émis :
               - lorsqu'un nombre de clients multimédia, dits clients cibles, affiliés à un même groupe, dit groupe développé, est supérieur dans ladite zone géographique, à un seuil préalablement déterminé ;
               - vers l'ensemble des entités participantes unicast desservant des clients localisés dans ladite zone géographique.

### BREVE DESCRIPTION DES FIGURES

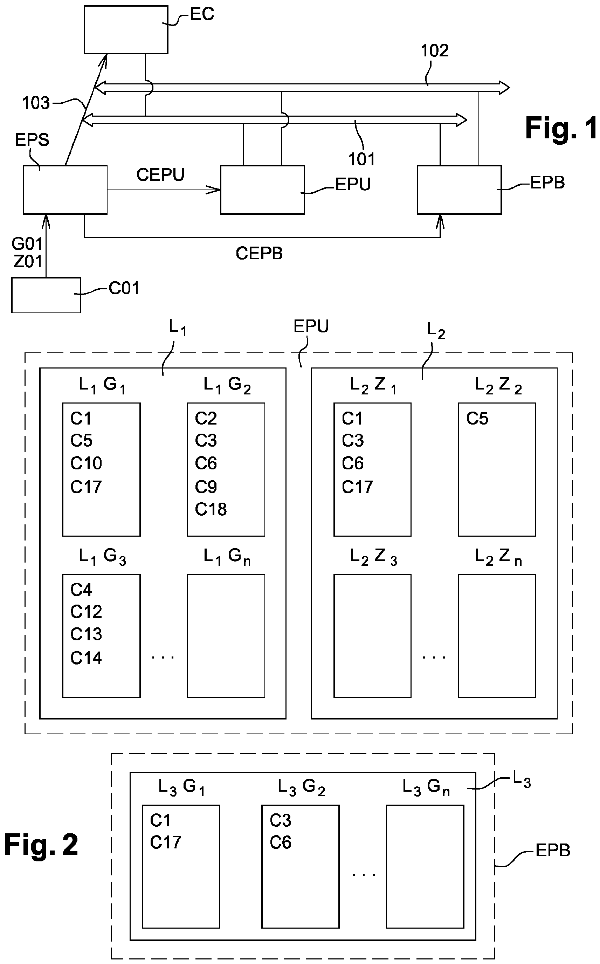

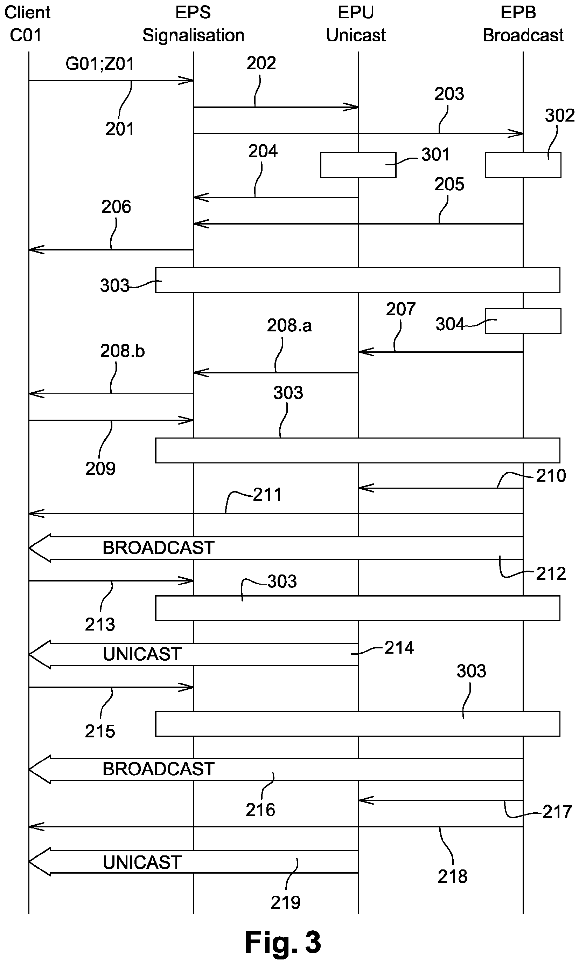

D'autres caractéristiques et avantages de l'invention ressortiront à la lecture de la description détaillée qui suit, en référence aux figures annexées, qui illustrent :
▪ figure 1 : une représentation schématique d'un exemple de système selon l'invention;
▪ figure 2: une représentation schématique d'un contexte de l'invention, constitué de différentes listes de terminaux intervenant dans le système selon l'invention.
▪ figure 3: un exemple de mise en œuvre d'échanges de messages entre les différentes entités du système selon l'invention.

### DESCRIPTION

Sauf précision contraire, un même élément présent sur différentes figures conserve la même référence.

La figure 1 montre une représentation fonctionnelle du système selon l'invention.

Différentes fonction de participation interviennent dans le système selon l'invention :
- une fonction de participation de signalisation ;
- une fonction de participation de distribution unicast ;
- une fonction de participation de distribution broadcast.

Les différentes fonctions de participation sont réparties sur différentes entités, typiquement des dispositifs de type serveur. Typiquement, les flux gérés par la fonction de participation de signalisation étant moins importants que les flux gérés par les fonctions de participation unicast et broadcast, la fonction de signalisation est avantageusement concentrée sur un unique serveur, alors que les fonctions de participation de distribution broadcast et unicast seront réparties sur des entités différentes, EPB et EPU, multiples. D'une manière générale, la répartition fonctionnelle des fonctions de participation sur différents dispositifs de type serveur peut être quelconque.

Sur cette figure, on illustre le fait qu'un client C01, par exemple un terminal mobile d'un utilisateur, a la capacité de s'affilier à un groupe G01, en étant présent dans une zone géographique Z01, en se signalant auprès de l'entité participante de signalisation EPS qui le contrôle. Ladite entité participante de signalisation EPS signale alors à l'entité de contrôle EC qui contrôle ledit groupe, via une liaison 103, l'appartenance du client C01 au groupe G01. L'entité de contrôle sert de point focal pour la gestion du média dans les communications de groupe. Elle reçoit de chaque entité participante unicast, dans le sens montant, des éléments de signalisation pour la gestion des autorisation des parole desdites entités, et renvoie des autorisation de parole après arbitrage entre les différentes entités participantes. L'entité de contrôle renvoie également le flux média du client autorisé par l'intermédiaire de l'entité participante correspondante, et le redistribue vers toutes les entités participantes de distribution visées pour que celles-ci procèdent à la distribution vers les clients en mode unicast ou broadcast selon les cas.

A noter qu'un même client peut être affilié à un groupe ou à plusieurs groupes distincts.

Une entité participante de signalisation EPS est apte à émettre des informations à destination d'une ou plusieurs entités participantes de distribution unicast EPU et d'une ou plusieurs entité participantes de distribution broadcast EPB. Ces informations transmises par une entité de signalisation le sont sous la forme de commandes, dites commande CEPU (à destination d'une entité participante unicast EPU) et commande CEPB (à destination de d'une entité participante broadcast EPB). Ces commandes CEPU et CEPB sont dites commande de création de contexte et permettent aux entités participantes de distribution EPB et EPU de constituer différentes listes, qui seront détaillées à la figure 2. Lesdites commandes sont listées dans un tableau récapitulatif qui sera détaillé en marge de la description de la figure 3. Les différentes listes ainsi constituées forment ce qui est appelé un contexte.

Selon l'invention, on prévoit :
- un premier flux de communication 101, qui permet l'échange du média à distribuer pour un groupe donné et de sa signalisation associée, entre l'entité de contrôle EC et les entités participantes unicast et broadcast EPU et EPB. Ces échanges peuvent s'effectuer en utilisant des adresses multicast correspondant aux groupes de communication auxquels sont affiliés les terminaux clients desservis.
- un second flux 102 qui permet un échange d'informations entre les entités participantes de distribution unicast et broadcast EPU et EPB en utilisant des adresses multicast correspondant aux zones géographiques dans lesquelles sont situés les terminaux clients desservis. Le flux 102 forme un bus logiciel dont les commandes sont listées dans le tableau récapitulatif qui sera détaillé en marge de la description de la figure 3.

Sur la figure 2, on a représenté ce qu'on désigne dans l'invention comme un contexte. Le contexte est formé de trois ensembles de listes :
- des premières listes L1 sont gérées et organisées par les entités participantes unicast EPU, qui organisent par groupe les différents clients intervenant dans le système selon l'invention et qui sont desservis par chacune desdites entités participantes unicast;
- des deuxièmes listes L2 sont gérées et organisées par les entités participantes unicast EPU, qui organisent par zone les différents clients intervenant dans le système selon l'invention et qui sont desservis par chacune desdites entités participantes unicast;
- des troisièmes listes L3 sont gérées et organisées par entités participantes broadcast EPB, qui organisent, pour une zone géographique donnée, par groupe les différents clients intervenant dans le système selon l'invention et situés dans la zone desservie par chacune desdites entités participantes broadcast.

On comprend ainsi, au regard des figures 1 et 2, que chacune des entités participantes de distribution unicast est en communication constante avec toutes les entités participantes de distribution broadcast qui desservent des zones où sont localisés des clients qu'elle contrôle. Ceci peut aisément être réalisé grâce à l'existence d'une adresse multicast pour chacune des zones couvertes par le système selon l'invention, une modification d'information relative à un client - par exemple un changement de zone - est prise en considération par l'ensemble du contexte par une mise à jour des listes L1, L2 et L3 au moyen des informations véhiculées sur le bus logiciel 102.

Le bus logiciel a pour fonction d'assurer la cohérence des informations contenues dans les différentes listes L1, L2 et L3, afin que les différentes entités participantes, unicast et broadcast, puissent décider en cohérence d'un mode de distribution unicast ou broadcast vers chaque client considéré du système. Une telle décision de basculement entre un mode de distribution unicast et broadcast ne fait ainsi pas intervenir l'entité de contrôle.

Sur la figure 3, on a représenté un exemple d'échanges susceptibles d'intervenir entre les différentes entités participantes (de signalisation, unicast et broadcast) et un client dans un exemple de mise en œuvre de l'invention dans le cadre de la spécification MCPTT utilisant le service MBMS de LTE.

Dans une première étape 201, un client C01, de type client MCPTT, présent dans une zone Z01 s'affilie à un groupe G01 par l'envoi d'un message d'affiliation respectant le standard MCPTT vers l'entité participante de signalisation EPS qui contrôle ce client. Il signale ainsi qu'il souhaite recevoir les messages destinés au groupe G01, tout en indiquant sa localisation géographique dans une zone Z01 grâce à un en-tête SIP PANI (P-Access Network Information). Ce message d'affiliation peut ou non s'accompagner d'une demande d'ouverture de session.

L'entité participante de signalisation EPS reçoit ainsi le message d'affiliation du client C01 et va en conséquence provoquer l'adaptation des listes L1, L2 et L3 du contexte en envoyant, cette information d'affiliation du client C01 :
- d'une part, dans une étape 202, à une entité participante de distribution unicast EPU ; ladite entité unicast EPU enregistre donc, dans une opération 301, la présence du client C01 à la fois dans la première liste L1 correspondant au groupe considéré et dans la deuxième liste L2 correspondant à la zone considérée. Si le client C01 est le premier client du groupe G01, l'entité unicast effectue une opération de jonction à une adresse multicast de groupe pour le groupe G01 (JOIN pour IP multicast). De la même manière, si le client C01 est le premier client dans la zone Z01, l'entité unicast effectue une opération de jonction à une adresse multicast de zone pour la zone Z01. L'entité participante de distribution unicast EPU émet alors, dans une étape 204, une message d'accusé de réception à l'entité participante de signalisation EPS, en lui communiquant les différentes adresses et numéros de port créées pour la distribution unicast des flux correspondant au groupe G01 vers le client C01 et depuis celui-ci .
- d'autre part, dans une étape 203, à l'entité participante broadcast EPB desservant la zone Z01 indique dans un en-tête PANI ; ladite entité participante broadcast EPB enregistre donc, dans une opération 302, la présence du client C01 dans la troisième liste L3. Si le client C01 est le premier client du groupe G01, l'entité participante broadcast EPB effectue une opération de jonction à l'adresse multicast de groupe pour le groupe G01 Ladite entité participante broadcast EPB émet alors, dans une étape 205, un message d'accusé de réception à la fonction de participation de signalisation EPS.

L'entité participante de signalisation EPS est apte à déterminer, à partir de l'information de zone Z01 et de l'information de groupe G01 respectivement vers quelle entité participante broadcast et vers quelle entité participante unicast il doit envoyer l'information d'affiliation du client C01.

Dans une étape suivante 206, l'entité participante de signalisation EPS émet à destination du client C01 un message de confirmation d'affiliation, accompagné éventuellement de la confirmation de l'ouverture d'une session utilisant les adresses et ports reçus de l'entité participante unicast à l'étape 204.

A partir de cette étape, dès que le client C01 change de groupe (en se retirant d'un groupe ou en rejoignant un nouveau groupe) ou de zone géographique, une opération 303 de mise à jour du contexte est opérée pour actualiser les listes L1, L2 et L3. Les échanges d'information à cet effet s'effectuent via le bus logiciel 102.

Dans une opération 304, une entité participante broadcast EPB détermine si, pour la zone géographique qu'elle dessert, le nombre de clients présents, pour un groupe donné, est supérieur à un seuil préalablement déterminé, dit seuil de déclenchement. Ce seuil peut être variable en fonction des zones géographiques considérées, ou même des groupes considérés.

Dans l'affirmative, ladite entité participante broadcast EPB émet, dans une étape 207, à destination des entités participantes unicast EPB desservant des clients localisés dans une zone desservie par ladite entité de distribution broadcast EPB, un message indiquant que le service de distribution broadcast est disponible. Le message est adressé par le bus logiciel 102 et est ainsi reçu par l'ensemble des entités de distribution unicast desservant un ou plusieurs clients dans la zone considérée Z01 grâce à l'opération de jonction effectuée lors de l'opération 301.

L'entité participante unicast EPU communique alors cette information à l'entité participante de signalisation EPS qui la contrôle dans une étape 208-a, et ce pour chaque terminal C01 se trouvant dans la zone considérée Z01. L'entité participante de signalisation EPS envoie alors cette information d'ouverture d'une session broadcast dans la zone Z01 au terminal C01 dans une étape 208-b. D'une manière générale, l'entité participante unicast EPU communique l'information d'ouverture d'un service de distribution broadcast dans la zone considérée Z01 en utilisant la deuxième liste L2, et en l'envoyant à tous les clients de cette deuxième liste L2 pour la zone concernée Z01 via l'entité participante de signalisation EPS.

Le terminal C01 émet alors, dans une étape 209, à réception du message d'information de disponibilité d'une distribution broadcast dans la zone où il est situé, un message indiquant son état de réception de ladite distribution et confirmant sa présence dans la zone de distribution broadcast, et donc sa disponibilité pour recevoir le service de distribution broadcast dans de bonnes conditions.

L'opération 303 précédemment évoquée de mise à jour du contexte est bien sûr toujours active à ce moment du procédé et permet de maintenir la cohérence des informations entre les différentes entités participantes.

Le groupe G01 auquel appartient le client C01 est sur le point de recevoir des messages en mode broadcast pour la zone Z01 dans laquelle le seuil de déclenchement a été dépassé.

Intervient alors une étape 210, dans laquelle l'entité participante broadcast EPB desservant ladite zone de distribution émet un message dit message d'avertissement de commutation à destination des entités participantes unicast EPU pour informer lesdites entités unicast ayant des clients du groupe visé G01 dans la zone considérée Z01 que le mode broadcast va être activé pour ce groupe G01 dans la zone Z01. La redondance de distribution des messages vers ces clients sera alors évitée. En effet, l'entité participante unicast EPU cessera d'émettre vers ces clients, tant qu'ils sont en réception du mode broadcast ; l'entité participante EPU aura pu identifier ces clients par le message d'avertissement diffusé par la fonction broadcast dans l'étape 210. L'entité participante broadcast EPB n'émet qu'en un seul exemplaire les messages destinés au groupe G01 pour les différents clients dans la zone Z01; messages obtenus grâce à l'opération de jonction à l'adresse multicast de groupe lors de l'étape 302.

Intervient également une étape 211 dans laquelle l'entité participante broadcast EPB émet vers tous les clients du groupe G01 présents dans la zone Z01, un message d'information informant les clients considérés qu'ils peuvent passer en mode de communication broadcast. Ce message est distribué aux clients en utilisant ledit mode de communication broadcast.

Le mode de communication broadcast est alors effectivement adopté, pour tous les clients du groupe G01 dans la zone Z01, dans une étape 212.

Un client, par exemple le client C01, est ensuite susceptible d'émettre, dans une étape 213, un message dit message d'information d'indisponibilité à destination de l'entité participante de signalisation qui le contrôle EPS indiquant qu'il n'est plus en état de recevoir la distribution broadcast dans des conditions de qualité acceptable ou qu'il ne souhaite plus le faire. Ce cas de figure peut être observé par exemple si le client en question quitte la zone Z01 ou si les ressources permettant la distribution broadcast sont préemptées. La mise à jour des tables L1, L2 et L3 du contexte est alors opérée dans une opération 303, comme précédemment, et une distribution en mode unicast est de nouveau activée dans une étape 214 par l'entité participante EPU qui les dessert vers chacun des clients concernés par ce changement de mode de distribution.

Dans l'hypothèse où le client ayant émis un message d'information d'indisponibilité dans l'étape 213 est de nouveau en mesure de recevoir le mode de distribution broadcast (par exemple suite à un retour dans la zone Z01), il émet de nouveau, dans une étape 215, un message de disponibilité à destination de l'entité participante de signalisation EPS qui le contrôle. Encore une fois, la mise à jour des tables L1, L2 et L3 du contexte est opérée dans une opération 303, et le mode de communication broadcast est de nouveau accessible pour le client considéré, qui ne reçoit en conséquence plus en mode unicast au moins pour les messages destinés au groupe G01.

Dans l'exemple décrit, une étape 217, dite étape d'interruption du mode broadcast pour un groupe donné, peut intervenir lorsque l'entité participante broadcast EPB interrompt la distribution en mode broadcast pour le groupe considéré G01 sur la zone Z01. Un message d'information d'interruption de distribution broadcast est alors communiqué aux différentes entité participantes unicast desservant des clients du groupe g01 dans la zone Z01 par transmission sur le bus logiciel 102 grâce à l'adresse multicast de la zone Z01 ; un message similaire est envoyé dans une étape 219 à l'ensemble des clients concernés en mode broadcast - c'est-à-dire à tous les clients du groupe considéré dans la zone en distribution broadcast. Un tel cas de figure peut intervenir par exemple pour des raisons de limitation en capacité de l'entité participante broadcast : celle-ci peut avoir été prévue pour distribuer en mode broadcast vers un nombre maximum de groupes, par exemple dix. Si le seuil de déclenchement est dépassé pour plus de dix groupes, un choix doit être fait pour déterminer quel groupe ne sera pas ou plus distribué en mode broadcast. Ce choix est réalisé selon des critères préalablement déterminés, par exemple en favorisant certains groupes par rapport à d'autres en fonction de leur activité, ou bien en favorisant les groupes qui sont passés en premier en mode broadcast, ou des groupes pour lesquels le nombre de clients dans la zone de distribution broadcast est le plus important.

La distribution en mode unicast est alors reprise dans une étape 219 vers les clients privés du mode de distribution broadcast.

Le tableau ci-dessous liste, en considérant l'exemple qui vient d'être décrit, l'ensemble des commandes véhiculées par le bus logiciel 102.

| Commande | émetteur | destinataire(s) | mode de transport |
|---|---|---|---|
| 202 information d'affiliation | EPS | EPU | Unicast |
| 203 information d'affiliation | EPS | EPB | Unicast |
| 204 accusé de réception | EPU | EPS | Unicast |
| 205 accusé de réception | EPB | EPS | Unicast |
| 207 distribution broadcast disponible | EPB | EPUs | Multicast @Zone |
| 208-a ouverture session broadcast | EPU | EPS | Unicast |
| 210 avertissement de commutation | EPB | EPUs | Multicast @Zone |
| 217 interruption du mode broadcast | EPB | EPUs | Multicast @Zone |

Ainsi, dans l'invention, on est capable de considérer zone par zone, groupe par groupe, si la distribution des messages depuis les différentes entités de participation se fait en mode broadcast ou en mode unicast. En outre, dans l'invention, on rend possible pour un client donné de recevoir simultanément des messages en mode broadcast dans le cadre de son appartenance à un premier groupe, et en mode unicast dans le cadre de son appartenance à un deuxième groupe.

Un cas pratique illustrant l'intérêt d'une telle possibilité peut consister en un client constitué par un terminal d'un chef pompier : s'il se situe dans une zone d'intervention, son équipe, qui appartiennent à son premier groupe de communication, est située dans la même zone géographique que lui. La distribution en mode broadcast pourra alors avantageusement être activée selon le procédé qui vient d'être décrit pour ce premier groupe de communication. Si dans un même temps ce terminal est également affilié à un deuxième groupe, par exemple lié au conseil municipal de sa ville, le mode unicast sera maintenu pour ce deuxième groupe de communication, pendant son intervention avec son équipe de pompiers.

A noter que la couverture d'un vaste territoire, par exemple la totalité d'un pays, n'est pas nécessairement assurée en mode broadcast dans la totalité de son étendue. Le mode broadcast, coûteux à déployer, est avantageusement activable dans les zones où une densité importante de population est potentiellement observable.

Notons enfin que l'invention ne se limite pas à l'utilisation d'un mode de distribution broadcast de type MBMS pour le standard LTE pour lequel les zones de distribution considérées sont des zones MBSFN (MBSFN Area selon le standard LTE) L'invention s'applique tout autant lorsque le mode de distribution utilisé est le mode dit SC-PTM (Single Cell Point-To-Multipoint) auquel cas les zones distribution considérées sont les zones de couverture d'une unique cellule.

## Revendications

1. Système de communication pour la transmission de données multimédia de groupe à un ensemble de clients multimédia, chaque client multimédia étant affilié à au moins un groupe de communication, ledit système de communication comportant :
- au moins une entité de contrôle (EC);
- au moins une entité participante de signalisation (EPS);
- au moins une entité participante supportant un service de distribution unicast, dite entité unicast (EPU);
- au moins une entité participante supportant un service de distribution broadcast, dite entité broadcast (EPB);
des sessions de média pour une ou plusieurs communications de groupe multimédia étant établies entre la au moins une entité de contrôle (EC) et au moins une entité participante, la au moins une entité participante de signalisation (EPS) et la au moins une entité unicast (EPU) desservant chacune au moins un sous-ensemble de clients multimédia de l'ensemble de clients multimédia, indépendamment de la localisation géographique desdits clients multimédia ;
la au moins une entité broadcast (EPB) desservant des clients multimédia locaux de l'ensemble de clients multimédia dans une zone géographique (Z1) donnée, indépendamment de l'entité participante de signalisation (EPS) desservant lesdits clients multimédia locaux ;
ledit système de communication comportant un bus logiciel (102) reliant les différentes entités participantes pour véhiculer des messages d'informations échangés entre les différentes entités participantes, lesdits messages d'information comportant des données de mise à jour pour :
- permettre à chaque entité unicast (EPU) de
*maintenir à jour une première liste (L1) contenant pour chaque groupe de communication (G1) auquel s'est affilié au moins un client multimédia (C1) desservi par ladite entité unicast (EPU) les clients multimédia affiliés audit groupe (G1) et desservis par ladite entité unicast (EPU);
*maintenir à jour une deuxième liste (L2) contenant pour chaque zone géographique (Z1) dans laquelle se trouve au moins un client multimédia (C1) desservi par ladite entité unicast (EPU) les clients multimédia se trouvant dans ladite zone géographique (Z1) et desservis par ladite entité unicast (EPU);
- permettre à chaque entité broadcast (EPB) de maintenir à jour une troisième liste (L3) contenant pour chaque groupe de communication (G1) auquel s'est affilié au moins un client multimédia (C1) présent dans la zone géographique (Z1) desservie par ladite entité broadcast (EPB) des clients multimédias, parmi ledit ensemble de clients multimédia, affiliés audit groupe de communication (G1) et qui sont présents dans ladite zone géographique (Z1), dans ledit système de communication l'émission, par un client multimédia (C1) de l'ensemble de clients multimédia, d'un message d'affiliation à un groupe de communication (G1) vers l'entité participante de signalisation (EPS) qui gère ledit client multimédia (C1), provoque l'envoi par ladite entité participante de signalisation (EPS) d'un message d'information d'affiliation:
- d'une part (202) à une des entités unicast (EPU), ladite entité unicast mettant à jour la première liste (L1) et la deuxième liste (L2);
- d'autre part (203) à une des entités broadcast (EPB), ladite entité broadcast mettant à jour la troisième liste (L3), et dans ledit système de communication chaque entité broadcast (EPB) émet un message de disponibilité d'un service de distribution broadcast (207) dans une zone géographique (Z1) desservie par ladite entité broadcast (EPB), le message de disponibilité étant émis (207) :
- lorsqu'un nombre de clients multimédia, dits clients cibles, affiliés à un même groupe (G1), dit groupe développé, est supérieur dans ladite zone géographique (Z1), à un seuil préalablement déterminé ;
- vers l'ensemble des entités participantes unicast (EPU) desservant des clients localisés dans ladite zone géographique (Z1).

2. Système de communication selon la revendication précédente **caractérisé en ce qu'**il comporte une fonction de participation de distribution unicast et une fonction de participation de distribution broadcast réparties respectivement sur une pluralité d'entités participantes supportant un service de distribution unicast (EPU), et sur une pluralité d'entités participantes supportant un service de distribution broadcast (EPB).

3. Système de communication selon l'une quelconque des revendications précédentes **caractérisé en ce qu'**il comporte une fonction de participation de signalisation installée sur une unique entité participante de signalisation (EPS).

4. Système de communication selon la revendication précédente **caractérisé en ce que** chaque entité broadcast (EPB) ayant émis le message de disponibilité (207) émet un message d'avertissement de commutation en mode de distribution broadcast (210) :
- après que chaque terminal client cible a émis un message indiquant sa disponibilité (213, 215) pour recevoir le mode de distribution broadcast ;
- vers les entités unicast ayant des clients cibles du groupe développé dans la zone géographique considérée, lesdites entités unicast cessant alors d'émettre en mode de distribution unicast vers lesdits clients cibles :
le mode de distribution broadcast étant alors mis en oeuvre vers les clients cibles.

5. Système de communication selon la revendication précédente **caractérisé en ce que** le mode de distribution broadcast est maintenu vers chaque client cible tant que le client cible considéré n'a pas émis de message d'information d'indisponibilité de réception broadcast (213).

6. Système de communication selon l'une quelconque des revendications précédentes **caractérisé en ce que** le service de distribution broadcast est de type MBMS pour le standard LTE, ou de type SC-PTM.

7. Procédé de communication pour la transmission de données multimédia de groupe à un ensemble de clients multimédia, ledit procédé étant mis en oeuvre dans un système selon l'une des revendications précédentes, chaque client multimédia étant affilié à au moins un groupe de communication (G1), ledit procédé de communication comportant la mise en oeuvre de :
- au moins une entité de contrôle (EC) ;
- au moins une entité participante de signalisation (EPS);
- au moins une entité participante supportant un service de distribution unicast, dite entité unicast (EPU);
- au moins une entité participant supportant un service de distribution broadcast, dite entité broadcast (EPB);
des sessions de média pour une ou plusieurs communications de groupe multimédia étant établies entre la au moins une entité de contrôle (EC) et la au moins une entité participante, la au moins une entité participante de signalisation (EPS) et la au moins une entité unicast (EPU) desservant chacun au moins un sous-ensemble de clients multimédia de l'ensemble de clients multimédia, indépendamment de la localisation géographique desdits clients multimédia ;
la au moins une entité broadcast (EPB) desservant des clients multimédia locaux de l'ensemble de clients multimédia dans une zone géographique (Z1) donnée, indépendamment de l'entité participante de signalisation (EPS) desservant lesdits clients multimédia locaux ;
ledit procédé de communication comportant les différentes étapes suivantes :
- utilisation d'un bus logiciel (102) reliant les différentes entités participantes (EPS, EPU, EPB) pour véhiculer des messages d'informations échangés entre les différentes entités participantes (EPS, EPU, EPB);
- mise à jour, au moyen de données de mise à jour desdits messages d'information:
--- de chaque entité unicast (EPU) en maintenant à jour :
* une première liste (L1) contenant pour chaque groupe de communication auquel s'est affilié au moins un client multimédia (C1) desservi par ladite entité unicast (EPU) les clients multimédia affiliés audit groupe et desservis par ladite entité unicast (EPU) ;
*une deuxième liste (L2) contenant pour chaque zone géographique (Z1) dans laquelle se trouve au moins un client multimédia (C1) desservi par ladite entité unicast (EPU) les clients multimédia se trouvant dans ladite zone géographique (Z1) et desservis par ladite entité unicast (EPU);
--- de chaque entité broadcast (EPB) en maintenant à jour une troisième liste (L3) contenant pour chaque groupe de communication auquel s'est affilié au moins un client multimédia (C1) présent dans la zone géographique (Z1) desservie par ladite entité broadcast (EPB) des clients multimédias, parmi ledit ensemble de clients multimédia, affiliés audit groupe de communication (G1) et présents dans ladite zone géographique (Z1),
- émission, par un client multimédia (C1) de l'ensemble de clients multimédia, d'un message d'affiliation à un groupe de communication (G1) vers l'entité participante de signalisation (EPS) qui gère ledit client multimédia (C1), provoquant l'envoi par ladite entité participante de signalisation (EPS) d'un message d'information d'affiliation:
- d'une part (202) à une des entités unicast (EPU), ladite entité unicast mettant à jour la première liste (L1) et la deuxième liste (L2);
- d'autre part (203) à une des entités broadcast (EPB), ladite entité broadcast mettant à jour la troisième liste (L3),
- et émission, par chaque entité broadcast (EPB), d'un message de disponibilité d'un service de distribution broadcast (207) dans une zone géographique (Z1) desservie par ladite entité broadcast (EPB), le message de disponibilité étant émis (207) :
- lorsqu'un nombre de clients multimédia, dits clients cibles, affiliés à un même groupe (G1), dit groupe développé, est supérieur dans ladite zone géographique (Z1), à un seuil préalablement déterminé ;
- vers l'ensemble des entités participantes unicast (EPU) desservant des clients localisés dans ladite zone géographique (Z1).

## Patentansprüche

1. Kommunikationssystem für die Übertragung von Gruppen-Multimediendaten auf eine Gruppe von Multimedien-Clients, wobei jeder Multimedien-Client wenigstens einer Kommunikationsgruppe zugeordnet ist, wobei das genannte Kommunikationssystem umfasst:
- wenigstens eine Kontrolleinheit (EC);
- wenigstens eine teilnehmende Signalisationseinheit (EPS);
- wenigstens eine teilnehmende Einheit, die einen Unicast-Verteilungsdienst, bezeichnet als Unicast-Einheit (EPU) unterstützt;
- wenigstens eine teilnehmende Einheit, die einen Broadcast-Verteilungsdienst, bezeichnet als Broadcast-Einheit (EPB) unterstützt;
wobei Medien-Sessions für eine oder mehrere Multimedien-Gruppenkommunikation(en) zwischen der wenigstens einen Kontrolleinheit (EC) und der wenigstens einen teilnehmenden Einheit aufgebaut sind, wobei die wenigstens eine teilnehmende Signalisationseinheit (EPS) und die wenigstens eine Unicast-Einheit (EPS) jeweils wenigsten eine Teilgruppe von Multimedien-Clients der Gruppe von Multimedien-Clients unabhängig von der geographischen Lokalisation der genannten Multimedien-Clients ansteuert;
wobei die wenigstens eine Broadcast-Einheit (EPB) lokale Multimedien-Clients der Gruppe von Multimedien-Clients in einer bestimmten geographischen Zone (Z1) unabhängig von der teilnehmenden Signalisationseinheit (EPS) ansteuert, die die genannten lokalen Multimedien-Clients ansteuert; wobei das genannte Kommunikationssystem einen Softwarebus (102) umfasst, der die unterschiedlichen teilnehmenden Einheiten zum Übertragen des Informationsnachrichten umfasst, die zwischen den unterschiedlichen teilnehmenden Einheiten ausgetauscht sind, wobei die genannten Informationsnachrichten Aktualisierungsdaten umfassen, um:
- jeder Unicast-Einheit (EPU) zu ermöglichen
* eine erste Liste (L1) auf dem neuesten Stand zu halten, die für jede Kommunikationsgruppe (G1) der wenigstens ein Multimedien-Client (C1) zugeordnet ist, der von der genannten Unicast-Einheit (EPU) angesteuert ist, die der genannten Gruppe (G1) zugeordneten und von der genannten Unicast-Einheit (EPU) angesteuerten Multimedia-Clients enthält;
* eine zweite Liste (L2) auf dem neuesten Stand zu halten, die für jede geographische Zone (Z1), in der sich wenigstens ein Multimedien-Client (C1) befindet, der von der genannten Unicast-Einheit (EPU) angesteuert ist, die Multimedien-Clients, die sich in der genannten geographischen Zone (Z1) befinden und von der genannten Unicast-Einheit (EPU) angesteuert sind, enthält;
- jeder Broadcast-Einheit (EPB) zu ermöglichen, eine dritte Liste (L3) auf dem neuesten Stand zu halten, die für jede Kommunikationsgruppe (G1), der wenigstens ein Multimedien-Client (C1) zugeordnet ist, der in der geographischen Zone (Z1) vorhanden ist, die von der genannten Broadcast-Einheit (EPB) angesteuert sind, Multimedien-Clients, aus der genannten Gruppe von Multimedien-Clients enthält, die der genannten Kommunikationsgruppe (G1) zugeordnet sind und die in der genannten geographischen Zone (Z1) vorhanden sind, in dem genannten Kommunikationssystem, das Senden durch einen Multimedien-Client (C1) der Gruppe von Multimedien-Clients einer Zuordnungsnachricht zu einer Kommunikationsgruppe (G1) zu der teilnehmenden Signalisationseinheit (EPS), die den genannten Multimedien-Client (C1) verwaltet, das Senden einer Zuordnungsinformationsnachricht durch die genannte teilnehmende Signalisationseinheit (EPS) hervorruft:
- einerseits (202) an eine der Unicast-Einheiten (EPU), wobei die genannte Unicast-Einheit die erste Liste (L1) und die zweite Liste (L2) aktualisiert;
- andererseits (203) an eine der Broadcast-Einheiten (EPB), wobei die genannte Broadcast-Einheit die dritte Liste (L3) aktualisiert;
und in dem genannten Kommunikationssystem jede Broadcast-Einheit (EPB) eine Verfügbarkeitsnachricht eines Broadcast-Verteilungsdienstes (207) in einer geographischen Zone (Z1) sendet, die von der genannten Broadcast-Einheit (EPB) angesteuert ist, wobei die Verfügbarkeitsnachricht gesendet ist (207):
- wenn eine Anzahl von Multimedien-Clients, bezeichnet als Ziel-Clients, die einer und derselben Gruppe (G1), bezeichnet als entwickelte Gruppe, zugeordnet sind, in der genannten geographischen Zone (Z1) größer ist als ein zuvor bestimmter Grenzwert;
- zu einer Gruppe der teilnehmenden Unicast-Einheiten (EPU), die in der genannten geographischen Zone (Z1) lokalisierte Clients ansteuern.

2. Kommunikationssystem gemäß dem voranstehenden Anspruch, **dadurch gekennzeichnet, dass** es eine Unicastverteilungs-Beteiligungsfunktion und eine Broastcastverteilung-Beteiligungsfunktion umfasst, die jeweils über eine Vielzahl von teilnehmenden Einheiten, die einen Unicast-Verteilungsdienst (EPU) unterstützen, und über eine Vielzahl von teilnehmenden Einheiten, die einen Broadcast-Verteilungsdienst (EPB) unterstützen, verteilt sind.

3. Kommunikationssystem gemäß irgendeinem der voranstehenden Ansprüche, **dadurch gekennzeichnet, dass** es eine Signalisations-Verteilungsfunktion umfasst, die auf einer einzigen teilnehmenden Signalisationseinheit (EPS) installiert ist.

4. Kommunikationssystem gemäß dem voranstehenden Anspruch, **dadurch gekennzeichnet, dass** jede Broadcast-Einheit (EPB), die die Verfügbarkeitsnachricht (207) sendet, eine Umschalt-Hinweisnachricht im Broadcast-Verteilungsmodus (210) sendet:
- nachdem jedes Ziel-Clientterminal eine Nachricht gesendet hat, die seine Verfügbarkeit (2123, 215) zum Empfangen des Broadcast-Verteilungsmodus angibt;
- zu den Unicast-Einheiten, die Ziel-Clients der in der betrachteten geographischen Zone entwickelten Gruppe aufweist, wobei die genannten Unicast-Einheiten dann das Senden im Unicast-Verteilungsmodus an die genannten Ziel-Clients einstellen;
wobei der Broadcast-Verteilungsmodus dann zu den Ziel-Clients umgesetzt ist.

5. Kommunikationssystem gemäß dem voranstehenden Anspruch, **dadurch gekennzeichnet, dass** der Broadcast-Verteilungsmodus zu jedem Ziel-Client beibehalten ist, solange der betrachtete Ziel-Client keine Informationsnachricht einer Nichtverfügbarkeit eines Broadcast-Empfangs (213) gesendet hat.

6. Kommunikationssystem gemäß irgendeinem der voranstehenden Ansprüche, **dadurch gekennzeichnet, dass** der Broadcast-Verteilungsdienst vom Typ MBMS für den Standard LTE oder vom Typ SC-PTM ist.

7. Kommunikationssystem für die Übertragung von Gruppen-Multimediendaten auf eine Gruppe von Multimedien-Clients, wobei das genannte Verfahren in einem System gemäß einem der voranstehenden Ansprüche umgesetzt ist, wobei jeder Multimedien-Client wenigstens einer Kommunikationsgruppe (G1) zugeordnet ist, wobei das genannte Kommunikationsverfahren das Umsetzen umfasst von:
- wenigstens einer Kontrolleinheit (EC);
- wenigstens einer teilnehmenden Signalisationseinheit (EPS);
- wenigstens einer teilnehmenden Einheit, die einen Unicast-Verteilungsdienst, bezeichnet als Unicast-Einheit (EPU), unterstützt;
- wenigstens eine teilnehmende Einheit, die einen Broadcast-Verteilungsdienst, bezeichnet als Broadcast-Einheit (EPB), unterstützt;
wobei Medien-Sessions für eine oder mehrere Multimedien-Gruppenkommunikation(en) zwischen der wenigstens eine Kontrolleinheit (EC) und der wenigstens einen teilnehmenden Einheit aufgebaut sind, wobei die wenigstens eine teilnehmende Signalisationseinheit (EPS) und die wenigstens eine Unicast-Einheit (EPU) jeweils wenigstens eine Teilgruppe von Multimedien-Clients der Gruppe von Multimedien-Clients unabhängig von der geographischen Lokalisation der genannten Multimedien-Clients ansteuert;
wobei die wenigstens eine Broadcast-Einheit (EPB) lokale Multimedien-Clients der Gruppe von Multimedien-Clients in einer bestimmten geographischen Zone (Z1) unabhängig von der teilnehmenden Signalisationseinheit (EPS) ansteuert, die die genannten lokalen Multimedien-Clients ansteuert; wobei das genannte Kommunikationsverfahren die folgenden unterschiedlichen Schritte umfasst:
- Verwendung eines Softwarebusses (102), der die unterschiedlichen teilnehmenden Einheiten (EPS, EPU, EPB) verbindet, um Informationsnachrichten zu übertragen, die zwischen den unterschiedlichen teilnehmenden Einheiten (EPS, EPU, EPB) ausgetauscht wurden;
- Aktualisierung mittels Aktualisierungsdaten der genannten Informationsnachrichten;
--- jeder Unicast-Einheit (EPU) durch Halten auf dem aktuellen Stand:
* einer ersten Liste (L1), die für jede Kommunikationsgruppe, der wenigstens ein Multimedien-Client (C1) zugeordnet ist, der von der genannten Unicast-Einheit (EPU) angesteuert ist, Multimedien-Clients enthält, die der genannten Gruppe zugeordnet und von der genannten Unicast-Einheit (EPU) angesteuert sind;
* einer zweiten Liste (L2), die für jede geographische Zone (Z1), in der sich wenigstens ein Multimedien-Client (C1) befindet, der von der genannten Unicast-Einheit (EPU) angesteuert ist, die Multimedien-Clients enthält, die sich in der genannten geographischen Zone (Z1) befinden und von der genannten Unicast-Einheit (EPU) angesteuert sind;
--- jeder Broadcast-Einheit (EPB) durch Halten auf dem neuesten Stand einer dritten Liste (L3), die für jede Kommunikationsgruppe, der sie zugeordnet ist, wenigstens einen Multimedien-Client (C1) enthält, der in der geographischen Zone (Z1) vorhanden ist, die von der genannten Broadcast-Einheit (EPS) der Multimedien-Clients, aus der die genannten Gruppe von Multimedien-Clients angesteuert ist, vorhanden ist, die der genannten Kommunikationsgruppe (G1) zugeordnet sind und in der genannten geographischen Zone (Z1) vorhanden sind,
- Senden einer Zuordnungsnachricht zu einer Kommunikationsgruppe (G1) durch einen Multimedien-Client (C1) der Gruppe von Multimedien-Clients an die teilnehmende Signalisationseinheit (EPS), die den genannten Multimedien-Client (C1) verwaltet, wodurch das Senden einer ZuordnungsInformationsnachricht durch die genannte teilnehmende Signalisationseinheit (EPS) hervorgerufen ist:
- einerseits (202) an eine der Unicast-Einheiten (EPU), wobei die genannte Unicast-Einheit die erste Liste (L1) und die zweite Liste (L2) aktualisiert;
- andererseits (203) an eine der Broadcast-Einheiten (EPB), wobei die genannte Broadcast-Einheit die dritte Liste (L3) aktualisiert;
- und Senden einer Verfügbarkeitsnachricht eines Broadcast-Verteilungsdienstes (207) durch jede Broadcast-Einheit (EPB) in einer geographischen Zone (Z1), die durch die genannte Broadcast-Einheit (EPB) angesteuert ist, wobei die Verfügbarkeitsnachricht (207) gesendet ist:
- wenn eine Anzahl von Multimedia-Clients, bezeichnet als Ziel-Clients, die einer und derselben Gruppe (G1), bezeichnet als entwickelte Gruppe, zugeordnet sind, in der genannten geographischen Zone (Z1) größer ist als ein zuvor bestimmter Grenzwert;
- an die Gruppe der teilnehmenden Unicast-Einheiten (EPU), die Clients ansteuern, die in der genannten geographischen Zone (Z1) lokalisiert sind.

## Claims

1. Communication system for the transmission of group multimedia data to a set of multimedia clients, each multimedia client being affiliated with at least one communication group, said communication system comprising:
- at least one control entity (EC);
- at least one signalling participating entity (EPS);
- at least one participating entity supporting a unicast distribution service, called unicast entity (EPU);
- at least one participating entity supporting a broadcast distribution service, called broadcast entity (EPB);
media sessions for one or more group multimedia communications being established between the at least one control entity (EC) and at least one participating entity, the at least one signalling participating entity (EPS) and the at least one unicast entity (EPU) each one serving at least one subset of multimedia clients of the set of multimedia clients, independently of the geographical location of said multimedia clients;
the at least one broadcast entity (EPB) serving local multimedia clients of the set of multimedia clients in a given geographical zone (Z1), independently of the signalling participating entity (EPS) serving said local multimedia clients;
said communication system comprising a software bus (102) linking the different participating entities to convey information messages exchanged between the different participating entities, said information messages comprising update data for:
- enabling each unicast entity (EPU) to
∘ maintain a first list (L1) containing for each communication group (G1) with which has become affiliated at least one multimedia client (C1) served by said unicast entity (EPU) the multimedia clients affiliated with said group (G1) and served by said unicast entity (EPU);
∘ maintain a second list (L2) containing for each geographic zone (Z1) wherein there is at least one multimedia client (C1) served by said unicast entity (EPU) the multimedia clients in said geographical zone (Z1) and served by said unicast entity (EPU);
- enabling each broadcast entity (EPB) to maintain a third list (L3) containing for each communication group (G1) with which has become affiliated at least one multimedia client (C1) present in the geographical zone (Z1) served by said broadcast entity (EPB) of the multimedia clients, among said set of multimedia clients, affiliated with said communication group (G1) and which are present in said geographical zone (Z1), in said communication system the emission, by a multimedia client (C1) of the set of multimedia clients, of an affiliation message with a communication group (G1) to the signalling participating entity (EPS) that manages said multimedia client (C1), causes the sending by said signalling participating entity (EPS) of an affiliation information message:
- on the one hand (202) to one of the unicast entities (EPU), said unicast entity updating the first list (L1) and the second list (L2);
- on the other hand (203) to one of the broadcast entities (EPB), said broadcast entity updating the third list (L3),
and in said communication system each broadcast entity (EPB) emits an availability message of a broadcast distribution service (207) in a geographical zone (Z1) served by said broadcast entity (EPB), the availability message being emitted (207):
- when a number of multimedia clients, called target clients, affiliated with the same group (G1), called developed group, is greater in said geographical zone (Z1), than a predetermined threshold;
- to the set of unicast participating entities (EPU) serving clients located in said geographical zone (Z1).

2. Communication system according to the preceding claim **characterised in that** it includes a unicast distribution participation function and a broadcast distribution participation function distributed respectively over a plurality of participating entities supporting a unicast distribution service (EPU), and over a plurality of participating entities supporting a broadcast distribution service (EPB).

3. Communication system according to any preceding claim **characterised in that** it includes a signalling participation function installed on a single signalling participating entity (EPS).

4. Communication system according to the preceding claim **characterised in that** each broadcast entity (EPB) having emitted the availability message (207) emits a switching warning message in broadcast distribution mode(210):
- after each target client terminal has emitted a message indicating its availability (213, 215) to receive the broadcast distribution mode;
- to the unicast entities that have target clients of the developed group in the geographical zone considered, said unicast entities then ceasing to emit in unicast distribution mode to said target clients:
the broadcast distribution mode then being implemented to the target clients.

5. Communication system according to the preceding claim **characterised in that** the broadcast distribution mode is maintained to each target client as long as the targe client considered has not emitted a broadcast reception unavailability information message (213).

6. Communication system according to any preceding claim **characterised in that** the broadcast distribution service is of the MBMS type for the LTE standard, or of the SC-PTM type.

7. Communication method for the transmission of group multimedia data to a set of multimedia clients, said method being implemented in a system according to one of the preceding claims, each multimedia client being affiliated with at least one communication group (G1), said communication method comprising the implementation of:
- at least one control entity (EC);
- at least one signalling participating entity (EPS);
- at least one participating entity supporting a unicast distribution service, called unicast entity (EPU);
- at least one participating entity supporting a broadcast distribution service, called broadcast entity (EPB);
media sessions for one or more group multimedia communications being established between the at least one control entity (EC) and the at least one participating entity, the at least one signalling participating entity (EPS) and the at least one unicast entity (EPU) each serving at least one subset of multimedia clients of the set of multimedia clients, independently of the geographical location of said multimedia clients;
the at least one broadcast entity (EPB) serving local multimedia clients of the set of multimedia clients in a given geographical zone (Z1), independently of the signalling participating entity (EPS) serving said local multimedia clients;
said communication method comprising the following different steps:
- using a software bus (102) linking the different participating entities (EPS, EPU, EPB) to convey information messages exchanged between the different participating entities (EPS, EPU, EPB);
- updating, by means of update data of said information messages:
--- of each unicast entity (EPU) by maintaining:
∘ a first list (L1) containing for each communication group with which has become affiliated at least one multimedia client (C1) served by said unicast entity (EPU) the multimedia clients affiliated with said group and served by said unicast entity (EPU);
∘ a second list (L2) containing for each geographic zone (Z1) wherein there is at least one multimedia client (C1) served by said unicast entity (EPU) the multimedia clients in said geographical zone (Z1) and served by said unicast entity (EPU);
--- of each broadcast entity (EPB) by maintaining a third list (L3) containing for each communication group with which has become affiliated at least one multimedia client (C1) present in the geographical zone (Z1) served by said broadcast entity (EPB) of multimedia clients, among said set of multimedia clients, affiliated with said communication group (G1) and present in said geographical zone (Z1),
- emitting, by a multimedia client (C1) of the set of multimedia clients, of an affiliation message with a communication group (G1) to the signalling participating entity (EPS) that manages said multimedia client (C1), causing the sending by said signalling participating entity (EPS) of an affiliation information message:
- on the one hand (202) to one of the unicast entities (EPU), said unicast entity updating the first list (L1) and the second list (L2);
- on the other hand (203) to one of the broadcast entities (EPB), said broadcast entity updating the third list (L3),
- and emitting, by each broadcast entity (EPB), of an availability message of a broadcast distribution service (207) in a geographical zone (Z1) served by said broadcast entity (EPB), the availability message being emitted (207):
- when a number of multimedia clients, called target clients, affiliated with the same group (G1), called developed group, is greater in said geographical zone (Z1), than a predetermined threshold;
- to the set of unicast participating entities (EPU) serving clients located in said geographical zone (Z1).
